# EUROPEAN PATENT SPECIFICATION

(11) **EP 3 400 406 B1**
(45) Date of publication and mention of the grant of the patent: **04.09.2019**
(21) Application number: 17700902.4
(22) Date of filing: 05.01.2017
(51) Int. Cl.: F24C 15/18, F24C 7/08

(54) **A COOKER**
KOCHER
CUISINIÈRE

(30) Priority: 05.01.2016 TR 201600114
(43) Date of publication of application: 14.11.2018
(73) Proprietor: Arçelik Anonim Sirketi, 34445 Istanbul (TR)
(72) Inventor: DOGANAY, Serdar Gokhan, 34950 Istanbul (TR); ASAR, Bengul, 34950 Istanbul (TR)
(86) International application number: PCT/EP2017/050174
(87) International publication number: WO 2017/118679

(56) References cited:
- EP-A1- 2 606 776
- US-A1- 2001 026 822
- US-A1- 2002 178 928
- US-A1- 2013 040 025

## Description

The present invention relates to a cooker comprising a probe.

Cooking foods in the desired level is important in terms of both user satisfaction and the foods keeping their vitamins. In overcooked foods, vitamin values substantially decrease. Moreover, in undercooked foods, particularly in meats, there is high possibility of bacteria growth. Undercooked foods may cause food poisoning. Therefore, foods, particularly meats must be cooked in the ideal level without losing their vitamins. While large foods such as chicken, etc., are being cooked, the outer surfaces can be overcooked while the inside may remain uncooked. Nowadays, probes are used in many ovens to prevent this problem. The probe is placed onto the food being cooked. The probes having a plurality of receivers determine the central temperature of the food, thus providing ideal cooking. Nowadays, flavoring processes are applied to foods such as meat, etc. with various aromas according to the palate. In domestic ovens, the users prefer this kind of aromatization methods. However, what is important in the aromatization process is to apply the method to the food at the right time according to the temperature of the food. Frequently, since the aroma is not homogeneously distributed on the food, dense aroma flavor on some of the regions of the food disturbs the user and on some regions the user cannot taste the desired aroma.

In the state of the art United States of America Patent Document No. US6855357, a cooking apparatus that diffuses aroma onto the food during the cooking process is disclosed.

The aim of the present invention is the realization of a cooker wherein the food can be cooked in the desired level and the aromatization process can be carried out at the right time during the cooking process.

The cooker realized in order to attain the aim of the present invention, explicated in the first claim and the respective claims thereof, comprises a body; a cooking chamber that is disposed on the body and wherein the cooking process is performed, and a probe that is disposed in the cooking chamber. By means of the probe, ideal cooking levels can be reached according to the user preference.

The cooker of the present invention comprises an aroma chamber wherein aroma can be added by the user and an aroma channel that provides the delivery of the aroma from the aroma chamber to the probe end. The aroma is added to the aroma chamber by the user. The aroma channel that extends from the aroma chamber to the probe end provides the delivery of the aroma.

In an embodiment of the present invention, the cooker comprises a sensor that is disposed at the probe end. By means of the sensor, temperature and/or humidity data can be received from the food. The cooking process is controlled by means of a control unit depending on the information received from the sensor.

In an embodiment of the present invention, the cooker comprises the control unit wherein the aromatization time is predefined. The best time to send the aroma onto the food is predefined in the control unit.

In an embodiment of the present invention, the cooker comprises a valve that is disposed between the aroma chamber and the aroma channel. The valve is controlled by the control unit. Thus, the aroma is enabled to be delivered from the aroma chamber to the probe end through the aroma channel.

In an embodiment of the present invention, the cooker comprises a control panel that is disposed on the body and an aroma control button that is disposed on the control panel. When the aroma control button is actuated by the user, the control unit provides the delivery of the aroma onto the food.

In an embodiment of the present invention, the cooker comprises an aroma level button that is disposed on the control panel and the control unit that delivers the aroma onto the food in various amounts depending on the selected aroma level. Thus, the user can adjust the level of the aroma flavor.

In an embodiment of the present invention, the probe comprises more than one probe end.

The cooker realized in order to attain the aim of the present invention is illustrated in the attached figures where
Figure 1 - is the schematic view of the cooker.
Figure 2 - is the schematic view of the probe.

The elements illustrated in the figures are numbered as follows:
- 1.: Cooker
- 2.: Body
- 3.: Cooking chamber
- 4.: Probe end
- 5.: Probe
- 6.: Aroma chamber
- 7.: Aroma channel
- 8.: Sensor
- 9.: Control unit
- 10.: Valve
- 11.: Control panel
- 12.: Aroma control button
- 13.: Aroma level button

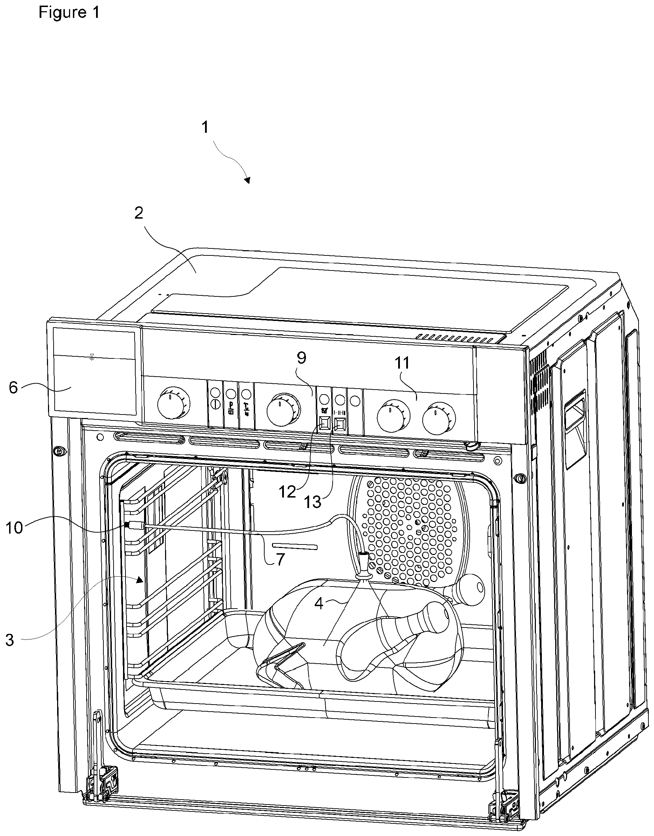

The cooker (1) comprises a body (2); a cooking chamber (3) that is disposed on the body (2) and wherein foods to be cooked are placed, and a probe (5) that is disposed in the cooking chamber (3) and that has at least one probe end (4) measuring the humidity and/or temperature by being placed into the food. By means of the probe (5), the foods are cooked at the level desired by the user. (Figure 1).

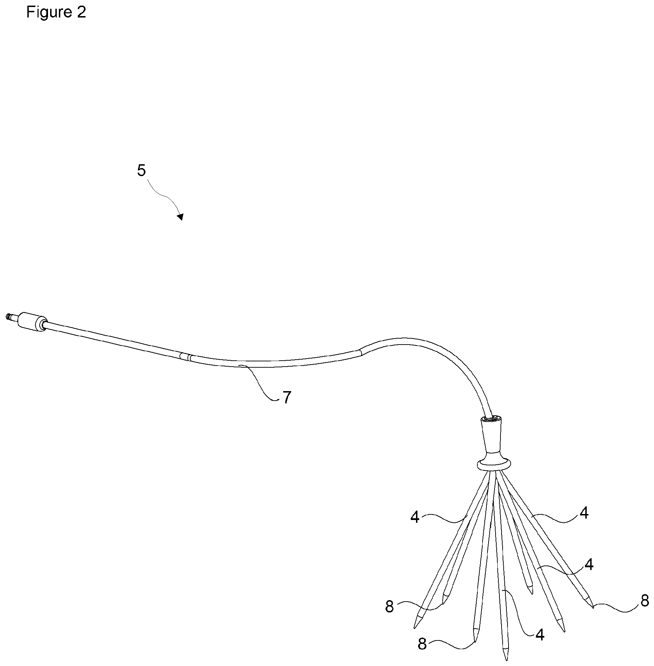

The cooker (1) of the present invention comprises an aroma chamber (6) that is disposed on the body (2) and wherein aroma can be added by the user, an aroma channel (7) with one end opening to the aroma chamber (6) and the other end to the probe (5), and the probe end (4) that provides the distribution of the aroma inside the food. The aroma channel (7) extends along the probe (5). The aroma reaches the food by moving through the aroma channel (7). By means of the probe end (4), the aroma is injected into the food. The user can add the desired aroma into the aroma chamber (6). Thus, ease of utilization is provided (Figure 2).

In an embodiment of the present invention, the cooker (1) comprises a sensor (8) that is disposed on the probe end (4) and a control unit (9) that controls the cooking process according to the humidity and/or temperature values received from the sensor (8). By means of the control unit (9), the cooking level of the probe is determined according to the information received from the probe ends (4). Thus, the cooking level desired by the user is obtained.

In a derivative of this embodiment, the control unit (9) comprises an aroma time (ta) that is predefined by the user and at which the aroma is homogeneously distributed over the food and warns the user at the aroma time (ta). It is important to carry out the aromatization process at the right time. The aromatization process is performed when the outer surface of the food is cooked, but the inside is not completely cooked. The outer surface serves as a shell over the food and the aroma can be homogeneously distributed in the food. The aroma time (ta) is defined on the control unit (9) with an algorithm. The control unit (9) determines the aromatization time according to the temperature and humidity values received from the sensors (8) and warns the user.

In an embodiment of the present invention, the cooker (1) comprises a valve (10) that is disposed on the aroma chamber (6), that is controlled by the control unit (9) and that provides or prevents the passage of the aroma from the aroma chamber (6) to the aroma channel (7). The valve (10) is disposed between the aroma chamber (6) and the aroma channel (7). With the command sent by the control unit (9), the valve (10) provides the passage of the aroma into the aroma channel (7).

In an embodiment of the present invention, the cooker (1) comprises a control panel (11) that is disposed on the body (2) and that enables the user to select the cooking parameters, and an aroma control button (12) that is disposed on the control panel (11) and that provides the delivery of the aroma from the aroma chamber (6) to the food when triggered. When the aroma time (ta) comes after the user starts the cooking process while the aroma control button (12) is active, the aroma is automatically delivered onto the food by the control unit (9). The user can cancel the aromatization process by changing the aroma control button (12) to the passive position.

In an embodiment of the present invention, the cooker (1) comprises an aroma level button (13) that enables the aroma density to be defined by the user from the control panel (11) and the control unit (9) that delivers the aroma onto the food in various amounts depending on the selected aroma level. The user can adjust the aroma density according to his/her preference. While less aroma can provide the desired flavor in small foods, a higher amount of aroma can be required in large foods. The user can select the aroma level according to his/her palate and starts the cooking process.

In an embodiment of the present invention, the probe (5) comprises more than one probe end (4). The aroma can be homogeneously distributed over the food with the probe ends (4) contacting the different points of the food.

By means of the cooker (1) of the present invention, the desired cooking level is provided and the aromatization process can be realized at the desired density and in a homogeneous manner. Thus, the user satisfaction is increased and the aromatization process can be performed at the ideal level in the domestic environment.

## Claims

1. A cooker (1) **comprising** a body (2); a cooking chamber (3) that is disposed on the body (2) and wherein foods to be cooked are placed, and a probe (5) that is disposed in the cooking chamber (3) and that has at least one probe end (4) measuring the humidity and/or temperature by being placed into the food, **characterized by** an aroma chamber (6) that is disposed on the body (2) and wherein aroma can be added by the user, an aroma channel (7) with one end opening to the aroma chamber (6) and the other end to the probe (5), and the probe end (4) that provides the distribution of the aroma inside the food.

2. A cooker (1) as in Claim 1, **characterized by** a sensor (8) that is disposed on the probe end (4) and a control unit (9) that controls the cooking process according to the humidity and/or temperature values received from the sensor (8).

3. A cooker (1) as in Claim 2, **characterized by** an aroma time (ta) that is predefined on the control unit (9) by the user and at which the aroma is homogeneously distributed over the food and the control unit (9) that warns the user at the aroma time (ta).

4. A cooker (1) as in Claim 2 or Claim 3, **characterized by** a valve (10) that is disposed on the aroma chamber (6), that is controlled by the control unit (9) and that provides or prevents the passage of the aroma from the aroma chamber (6) to the aroma channel (7).

5. A cooker (1) as in any one of the above claims, **characterized by** a control panel (11) that is disposed on the body (2) and that enables the user to select the cooking parameters, and an aroma control button (12) that is disposed on the control panel (11) and that provides the delivery of the aroma from the aroma chamber (6) to the food when triggered.

6. A cooker (1) as in any one of the claims 2 to 5, **characterized by** an aroma level button (13) that enables the aroma density to be defined by the user from the control panel (11) and the control unit (9) that delivers the aroma onto the food in various amounts depending on the selected aroma level.

7. A cooker (1) as in any one of the above claims, **characterized by** the probe (5) comprising more than one probe end (4).

## Patentansprüche

1. Ein Kocher (1) **umfasst** einen Körper (2); einen Garraum (3), das auf den Körper (2) angeordnet ist und darin zu garende Speisen eingelegt werden, eine Sonde (5), das an den Garraum (3) angeordnet ist und mindestens einen Sondenende (4) aufweist, das durch das Einlegen des Lebensmittel die Luftfeuchtigkeit / und oder die Temperatur misst; **gekennzeichnet ist** es durch eine Aromakammer (6), die an dem Körper (2) angeordnet ist und darin durch den Benutzer Aroma hinzugefügt werden kann, einen Aromakanal (7), dessen ein Ende zu der Aromakammer (6) und das andere Ende zu der Sonde (5) und dem Sondenende (4) angebracht ist, damit die Verteilung des Aromas im Lebensmittel gewährleistet ist.

2. Ein Kocher (1), wie in Anspruch 1 aufgeführt, **ist dadurch gekennzeichnet, dass** ein Sensor (8) an dem Sondenende (4) angeordnet ist und eine Steuereinheit (9), die den Kochvorgang passend den Feuchtigkeits- und / oder Temperaturwerten steuert, die von dem Sensor (8) empfangen werden.

3. Ein Kocher (1), wie in Anspruch 2 aufgeführt, **ist dadurch gekennzeichnet, dass** durch den Benutzer an der Steuereinheit (9) eine Aromazeit (ta) vorgegeben wird, bei der das Aroma homogen auf das Lebensmittel verteilt wird und der Benutzer zum Aromazeitpunkt (ta) durch die Steuereinheit (9) gewarnt wird.

4. Ein Kocher (1), wie in Anspruch 2 oder 3 aufgeführt, **ist dadurch gekennzeichnet, dass** sein Ventil (10) an der Aromakammer (6) angeordnet ist, das von der Steuereinheit (9) gesteuert wird und das den Durchgang des Aromas von der Aromakammer (6) zu dem Aromakanal (7) bereitstellt oder verhindert.

5. Ein Kocher (1), wie in einem der vorherigen Ansprüchen aufgeführt, **ist dadurch gekennzeichnet,** das sein Bedienfeld (11) an dem Körper (2) angeordnet ist und dem Benutzer die Auswahl der Garparameter ermöglicht; und einen Aromasteuerungsknopf (12), der auf dem Bedienfeld angeordnet ist und die bei Auslösung die Abgabe des Aromas aus der Aromakammer (6) an das Lebensmittel ermöglicht.

6. Ein Kocher (1), wie in den Ansprüchen 2 bis 5 aufgeführt, **ist dadurch gekennzeichnet, dass** durch eine Aromastufentaste (13) der Benutzer die Aromadichte über das Bedienfeld (11) und die Steuereinheit (9) festlegen kann und je nach ausgewählter Aromastufe wird das Aroma in unterschiedlichen Mengen auf das Lebensmittel abgegeben.

7. Ein Kocher (1), wie in einem der vorherigen Ansprüchen aufgeführt, **ist dadurch gekennzeichnet, dass** die Sonde (5) mehr als eine Sonde aufweist (4).

## Revendications

1. Un appareil de cuisson (1) **comprenant** un corps (2) ; une chambre de cuisson (3) qui est disposée sur le corps (2) et dans laquelle des aliments à cuire sont placés, et une sonde (5) qui est disposée dans la chambre de cuisson (3) et qui a au moins une extrémité de sonde (4) mesurant l'humidité et/ou la température en étant placée dans les aliments, **est caractérisé par** une chambre d'arôme (6) qui est disposée sur le corps (2) et dans laquelle l'arôme peut être ajouté par l'utilisateur, un canal d'arôme (7) avec une extrémité ouvrant vers la chambre d'arôme (6) et l'autre extrémité vers la sonde (5), et l'extrémité de sonde (4) qui assure la distribution de l'arôme dans les aliments.

2. Un appareil de cuisson (1) selon la déclaration 1, **est caractérisé par** un capteur (8) disposé à l'extrémité de la sonde (4) et une unité de commande (9) qui commande le processus de cuisson en fonction des valeurs d'humidité et/ou de température reçues du capteur (8).

3. Un appareil de cuisson (1) selon la déclaration 2, **est caractérisé par** un temps d'arôme (ta) qui est prédéfini sur l'unité de commande (9) par l'utilisateur et auquel l'arôme est distribué de manière homogène sur l'aliment et l'unité de commande (9) qui avertit l'utilisateur du temps d'arôme (ta).

4. Un appareil de cuisson (1) selon la déclaration 2 ou la déclaration 3, **est caractérisé par** une soupape (10) qui est disposée sur la chambre d'arôme (6), qui est commandée par l'unité de commande (9) et qui assure ou empêche le passage de l'arôme de la chambre d'arôme (6) dans le canal (7).

5. Un appareil de cuisson (1) comme dans l'une quelconque des déclarations ci-dessus, **est caractérisé par** un panneau de commande (11) qui est disposé sur le corps (2) et qui permet à l'utilisateur de sélectionner les paramètres de cuisson, et un bouton de commande d'arôme (12) qui est disposé sur le panneau de commande (11) et qui fournit aux aliments la délivrance de l'arôme depuis la chambre aromatique (6) quand il est activé.

6. Un appareil de cuisson (1) selon l'une quelconque des déclarations 2 à 5, **est caractérisé par** un bouton de niveau d'arôme (13) qui permet à l'utilisateur de définir la densité d'arôme à partir du panneau de commande (11) et de l'unité de commande (9) qui fournit l'arôme aux aliments en différentes quantités en fonction du niveau d'arôme sélectionné.

7. Un appareil de cuisson (1) comme dans l'une quelconque des déclarations ci-dessus, **est caractérisé en ce que** la sonde (5) comprend plus d'une extrémité de sonde (4).
